# EUROPÄISCHE PATENTSCHRIFT

(11) **EP 1 377 731 B1**
(45) Veröffentlichungstag und Bekanntmachung des Hinweises auf die Patenterteilung: **04.11.2009**
(21) Anmeldenummer: 02707055.6
(22) Anmeldetag: 21.03.2002
(51) Int. Cl.: F01K 23/10

(54) **VERFAHREN ZUR SOFORTIGEN, SCHNELLEN UND TEMPORÄREN ERHÖHUNG DER LEISTUNG EINES KOMBIKRAFTWERKES**
METHOD FOR IMMEDIATELY, RAPIDLY AND TEMPORARILY INCREASING THE OUTPUT OF A COMBINED POWER STATION
PROCEDE D'AUGMENTATION IMMEDIATE, RAPIDE ET TEMPORAIRE DE LA PUISSANCE D'UNE CENTRALE MIXTE

(30) Priorität: 27.03.2001 DE 10115131
(43) Veröffentlichungstag der Anmeldung: 07.01.2004
(73) Patentinhaber: Alstom Technology Ltd, 5400 Baden (CH)
(72) Erfinder: LIEBIG, Erhard, 79725 Laufenburg (DE)
(86) Internationale Anmeldenummer: PCT/IB2002/000851
(87) Internationale Veröffentlichungsnummer: WO 2002/077420

(56) Entgegenhaltungen:
- EP-A- 0 967 366
- EP-A- 1 050 667
- FR-A- 1 352 876
- US-A- 3 505 811
- US-A- 4 222 229
- GERICKE B: "KOMBI-ANLAGEN FUER INDUSTRIE UND KOMMUNEN. TEIL 2: ZUSATZBEFEUERTEREINDRUCKPROZESS MIT REKU UND ZUSATZBEFEUERTER MEHRDRUCKPROZESS MIT ZUE" VGB KRAFTWERKSTECHNIK, VGB KRAFTWERKSTECHNIK GMBH. ESSEN, DE, Bd. 77, Nr. 11, 1. November 1997 (1997-11-01), Seiten 912-919, XP000724054 ISSN: 0372-5715

## Beschreibung

### TECHNISCHES GEBIET

Die vorliegende Erfindung betrifft ein Verfahren zur sofortigen, schnellen und temporären Erhöhung der Leistung eines Kombikraftwerkes. Insbesondere betrifft sie ein Verfahren, bei welchem über das Zusammenspiel der Brennstoffwärmeleistung der Gasturbinenanlage und einer Zusatzfeuerung im Abhitzekessel "primary response" und "secondary response" Anforderungen durch ein Kombikraftwerk anlageschonend erfüllt werden.

### STAND DER TECHNIK

Mit der Liberalisierung der Energiemärkte wird der Wettbewerb auch auf dem Gebiet der Stromversorgung erheblich verschärft. Dies führt einerseits zur schnellen Realisierung moderner Energieumwandlungsverfahren insbesondere mit sehr hohem Wirkungsgrad. Aber auch auf dem Gebiet der Bereitstellung von kalter und heisser Reserveleistung ist man bestrebt, nach kostengünstigeren Möglichkeiten zu suchen. Diesen Anforderungen werden Gasturbinenanlagen und Kombikraftwerke in hohem Masse gerecht.

Gasturbinenanlagen sind in der Lage, vergleichsweise sehr grosse Leistungsgradienten zu realisieren. Dies gilt sowohl für einen Kaltstart als auch für Leistungssteigerungen aus einem beliebigen Leistungspunkt heraus. Moderne Gasturbinenanlagen sind heute in der Lage, in 30 bis 40 Minuten aus dem kalten Zustand auf Nennleistung zu fahren.

Im Ergebnis der Liberalisierung verlangen die Stromnetzbetreiber von den Kraftwerken der Stromerzeuger zunehmend "primary response" Eigenschaften. Der Ausdruck "primary response" bezieht sich auf eine Steigerung der Leistung über die angemeldete bzw aktuell gefahrene Ist-Leistung eines jeweiligen Energieerzeugers mit einem definierten Leistungsgradienten. Beispielsweise soll die Zunahme der Leistung von der Ist-Leistung zu einer geforderten ca. 10 % höheren Leistung innerhalb 10 Sekunden erfolgen. D.h.. die Kraftwerke müssen im Falle des Absinkens der Netzfrequenz (beispielsweise 0.5 Hz) in der Lage sein, in einer gewissen Zeiteinheit (beispielsweise 10 sec.) eine Leistungssteigerung (beispielsweise 10 % der Ist-Leistung) zu erbringen. Diese Leistungssteigerung sollte dann im Sinne von "secondary response" über einen Bereich von beispielsweise 30 Minuten oder länger gehalten werden können. Mit "secondary Response" wird das Halten einer Zusatzleistung über einer Ist-Leistung definiert, d.h. beispielsweise der Betrieb mit einer Zusatzleistung von z.B. 10% während einem Zeitraum von z.B. 30 Minuten.

Für Fragen von "primary response" und "secondary response" sind damit der maximal fahrbare Leistungsgradient, der Betrag der Zusatzleistung in Abhängigkeit der aktuell gefahrenen Ist-Leistung und die maximale Dauer für das Fahren der Zusatzleistung von Interesse. Das Erbringen einer Zusatzleistung sollte, mit Ausnahme der Grenzleistung, aus jedem Lastpunkt heraus möglich sein. Besonders hohe Anforderungen stellt dabei eine Leistungssteigerung über die Nennleistung hinaus.

Der Begriff der Nennleistung ist dabei identisch mit dem Begriff der Grenzdauerleistung, also einer oberen Leistung, für welche die Anlage für den Dauerbetrieb ausgelegt ist. Unter Teillast wird dabei eine Leistung unterhalb der Grenzdauerleistung und unter Überlast eine Leistung oberhalb der Grenzdauerleistung verstanden. Für die zeitlich begrenzte maximal fahrbare Leistung wird nachfolgend der Begriff Grenzleistung verwendet.

Leistungssteigerungen sind insbesondere während netzseitiger Spitzenlastzeiten kritisch, während welchen die jeweiligen Energieerzeuger bereits mit ihrer Grenzdauerleistung (Nennleistung) betrieben werden, und gleichzeitig ein ungeplantes Ereignis auftritt, welches eine kurzzeitige Leistungserhöhung über die Grenzdauerleistung hinaus erfordert.

Wie bereits erwähnt, sind Gasturbinenanlagen in der Lage, vergleichsweise sehr grosse Leistungsgradienten zu fahren. Aus diesem Grunde bieten sich Gasturbinenanlagen prinzipiell für "primary response" Zwecke an.

Moderne Gasturbinenanlagen sind allerdings heute aus Wirkungsgradgründen so ausgelegt, dass sie in einem weiten oberen Leistungsbereich im Bereich der für den Dauerbetrieb bei Nennleistung maximal zulässigen Auslegungstemperaturen (obere Prozesstemperatur) fahren, d. h. sich an ihrem für den Dauerbetrieb temperaturseitigen Auslegungslimit befinden.

In diesem oberen Leistungsbereich wird die Leistung über den Massenstrom mittels verstellbarer Leitschaufeln am Verdichtereintritt geregelt. Leistungssteigerungen in diesem Bereich führen daher beim Verlassen der Fahrregime des Normalbetriebes zu Überschreitungen der Auslegungstemperaturen, was sich negativ auf die Lebensdauer insbesondere der betroffenen Bauteile des Heissgaspfades auswirkt.

Daraus folgt aber auch, dass eine Leistungsteigerung über die Nennleistung hinaus bei der heute üblichen Auslegung nur durch ein Überfeuern der Gasturbinenanlage erreicht werden kann. Nachteilig dabei ist, dass die Gasturbinenanlage durch diese vom Normalregime abweichende Fahrweise sehr viele äquivalente Betriebsstunden (EOH - Equivalent Operating Hours, OH - Operating Hours, Betriebsstunden) erzeugt bzw. sehr viele Lebensdauerstunden verliert (beispielsweise 1.3 EOH/OH für steam injection oder 1.5 EOH/OH für frequency response). Dies insbesondere dann, wenn die Überlast lange durchgehalten werden muss.

Ein weiterer kritischer Fall kann bei einer schnellen Leistungssteigerung mit anschliessendem Halten der Leistung über einen secondary response Zeitraum beim Starten der Gasturbinenanlage aus dem kalten Zustand entstehen. Insbesondere bei einem Kaltstart kann es infolge technisch notwendiger Stabilisierungsprozesse bei bestimmten Leistungen erforderlich sein, Haltepunkte zu realisieren, bei welchen die Leistung im wesentlichen konstant gehalten wird. Bei einem plötzlichen Leistungsbedarf im Augenblick vor oder während eines derartigen Haltepunktes kann es erforderlich werden, diese Haltepunkte zu durchfahren, maximal zulässige Leistungs- bzw. Temperaturgradienten zu überschreiten usw.

### DARSTELLUNG DER ERFINDUNG

Der Erfindung liegt demnach die Aufgabe zugrunde, ein Verfahren zur sofortigen, schnellen und temporär bleibenden Erhöhung der Leistung eines Kombikraftwerkes zur Verfügung zu stellen.

Unter dem Begriff "sofortig" ist in diesem Zusammenhang zu verstehen, dass die Erhöhung der Leistung im wesentlichen zeitverzugslos nach dem Abruf des Strombetreibers an den Generatoren des Kombikraftwerkes wirksam einzusetzen beginnt. "Schnell" ist in diesem Zusammenhang so zu verstehen, dass sich die Erhöhung der Leistung in kurzer Zeit einstellt, d.h. dass ein grosser positiver Leistungsgradient gefahren werden kann. "Temporär bleibend" soll hier so verstanden werden, dass die Zusatzleistung nach dem Aufbau auf das geforderte Maximum nicht sofort wieder zurückgefahren, sondern vor dem Zurücknehmen über einen gewissen Zeitraum im wesentlichen konstant gehalten wird.

Dabei handelt es sich um ein Kombikraftwerk bestehend aus mindestens einer Gasturbinenanlage, mindestens einem Abhitzekessel und mindestens einer

Dampfturbinenanlage, wobei die Gasturbinenanlage aus mindestens einem Verdichter, mindestens einer Brennkammer und mindestens einer Gasturbine besteht. Der Abhitzekessel weist mindestens eine Druckstufe auf und die Dampfturbinenanlage besteht aus mindestens einer Dampfturbine.

Bei einem derartigen Kombikraftwerk wird Luft in einem Verdichter verdichtet, dann als Verbrennungsluft einer Brennkammer zugeführt, das dort entstehende Heissgas auf eine Gasturbine geleitet, und das Abgas der Gasturbine in einem Abhitzekessel zur Erzeugung von Dampf für eine Dampfturbinenanlage verwendet. Das Verfahren soll es ermöglichen, schnelle, netzseitig geforderte Leistungsgradienten zu fahren und die erhöhte Leistung während eines gewissen Zeitraums zu halten.

Die Lösung dieser Aufgabe wird dadurch erreicht, dass zur zusätzlichen Erwärmung des Abgases der Gasturbine eine Zusatzfeuerung angeordnet ist, und dass für sofortige, schnelle und bleibende Leistungssteigerungen des Kombikraftwerkes die Gasturbinenanlage zur Leistungssteigerung stärker befeuert wird und gleichzeitig die Zusatzfeuerung zugeschaltet wird, und dass, in dem Masse wie eine durch infolge der Zusatzfeuerung bereitgestellte zusätzliche Dampfleistung Ober die Dampfturbinenanlage als Wellenleistung verfügbar wird, die Gasturbinenanlage in ihrer Leistung wieder zurückgefahren wird.

Der Kern der Erfindung besteht somit darin, mit einer Zusatzfeuerung zusätzliche Leistung zur Verfügung zu stellen. Da sich aber diese zusätzliche Leistung infolge thermischer Trägheit des Wasser-/Dampf-Kreislaufes vergleichsweise langsam aufbaut und damit verzögert dampfturbinenseitig, resp. ggf. generatorseitig verfügbar wird, wird für den sofortigen und schnellen Leistungsanstieg sowie die erste Phase des Fahrens der erhöhten Leistung zunächst die für derartige schnelle Leistungssteigerungen (primary response) geeignete Gasturbinenanlage genutzt. In dem Masse wie sich die über die Zusatzfeuerung und die Dampfturbinenanlage erbrachte Zusatzleistung auch effektiv nutzbar am Generator aufbaut, kann die zusätzliche Befeuerung der Gasturbinenanlage wieder zurückgenommen werden, was für die Gasturbinenanlage schonend ist. Dies bedeutet, dass der secondary response Zeitraum im wesentlichen über die Zusatzfeuerung und die Dampfturbinenanlage abgefahren wird.

Eine erste Ausführungsform des erfindungsgemässen Verfahrens zeichnet sich dadurch aus, dass die temporär bleibende Leistungssteigerung des Kombikraftwerkes allein über die Zusatzfeuerung und die Dampfturbinenanlage erbracht wird, und dass die Gasturbinenanlage während des Aufbaus der Zusatzleistung über die Zusatzfeuerung wieder in ihren ursprünglichen Befeuerungszustand zurückgefahren wird. Durch dieses schnellstmögliche Zurückfahren der Gasturbinenanlage in den ursprünglichen Betriebspunkt wird sichergestellt, dass die Gasturbinenanlage maximal geschont bzw. nur in minimalem Umfang überlastet wird.

Bei einer zweiten Ausführungsform des Verfahrens handelt es sich beim Kombikraftwerk um eine Anlage, bei welcher die Gasturbinenanlage einen stromerzeugenden Generator antreibt, und das Kombikraftwerk eine Dampfturbinenanlage mit mehreren Dampfturbinen, insbesondere bevorzugt mit einer Hochdruckdampfturbine und einer Mitteldruck- resp. Niederdruckdampfturbine umfasst. Ebenfalls können die Gasturbinenanlage und die Dampfturbinenanlage auf einer Welle angeordnet sein, und die Gasturbinenanlage und die Dampfturbinenanlage über diese gemeinsame Welle einen stromerzeugenden Generator antreiben (Einwellenanlage). Dabei kann der Generator zwischen der Gasturbinenanlage und der Dampfturbinenanlage angeordnet sein, und es kann sich zwischen der Dampfturbinenanlage und dem Generator eine Kupplung befinden.

Bei einer weiteren Ausführungsform der Erfindung sind der Abhitzekessel und die Dampfturbinenanlage in einem geschlossenen Wasser-/Dampfkreislauf angeordnet.

Bei einer weiteren Ausführungsform der Erfindung handelt es sich um eine Leistungssteigerung des Kombikraftwerkes im Bereich von 5 - 15 %, insbesondere bevorzugt im Bereich von 5 - 10 %, und diese Leistungssteigerung muss dabei in einem Zeitbereich von 5 - 30 s, insbesondere bevorzugt im Bereich von 5 - 10 s aufgebaut werden. Die zusätzliche Leistung muss während eines weiteren Zeitraumes im Bereich von wenigstens 5 - 50 min, insbesondere während eines Zeitraumes von 15 - 30 min gehalten werden. Gerade bei derartigen Leistungsgradienten bzw. Fahrzeiten für Zusatzleistungen ist das erfindungsgemässe Verfahren effizient einsetzbar ohne dabei die Komponenten des Kraftwerkes übermässig stark zu belasten. Das Zurückfahren der Gasturbinenanlage in den ursprünglichen Leistungsbereich, kann in einem Zeitbereich von10 s - 5 min, insbesondere im Bereich von 30 s - 2 min geschehen.

Häufig wird dabei die Leistungssteigerung durch einen Netzfrequenzabfall in der Grössenordnung von 0.1 - 3.0 Hz, insbesondere von 0.5 -1.0 Hz ausgelöst resp. notwendig.

Bei einer weiteren Ausführungsform der Erfindung fährt die Gasturbinenanlage vor der Leistungssteigerung bereits bei Nennleistung, und die sofortige, schnelle und temporär bleibende Leistungssteigerung der Gasturbinenanlage wird durch Überfeuerung der Gasturbinenanlage bewirkt. Gerade wenn die Gasturbinenanlage bei Nennleistung betrieben wird, stellt sich das Problem der Leistungssteigerung besonders. Da eine Gasturbinenanlage bei Nennleistung auch an ihrer für den Dauerbetrieb maximal zulässigen oberen Temperaturgrenze fährt, kann eine weitere Leistungssteigerung nur durch ein normalerweise für die gesamte Gasturbinenanlage schädliches Überfeuern erreicht werden. Das schnellstmögliche Zurückfahren der Gasturbinenanlage nach dem Erbringen der primary response Leistung ist deshalb in dieser Situation von besonderem Interesse.

Bei einer weiteren bevorzugten Ausführungsform des vorgeschlagenen Verfahrens ist die Zusatzfeuerung In Strömungsrichtung des Abgases der Gasturbinenanlage vor dem Abhitzekessel und/oder innerhalb des Abhitzekessels angeordnet. Ebenso kann die Zusatzfeuerung ausserhalb des Abgasstromes der Gasturbinenanlage angeordnet sein und über einen Frischlüfter verfügen, wobei das Rauchgas der Zusatzfeuerung mit dem Abgas der Gasturbinenanlage gemischt wird. Dabei kann die Mischung des Abgases der Gasturbinenanlage und des Rauchgases der Zusatzfeuerung in Strömungsrichtung des Abgases der Gasturbinenanlage vor dem Abhitzekessel und/oder innerhalb des Abhitzekessels erfolgen.

Weitere bevorzugte Ausführungsformen der Erfindung sind in den abhängigen Ansprüchen beschrieben.

### KURZE ERLÄUTERUNG DER FIGUREN

Die Erfindung soll nachfolgend anhand von Ausführungsbeispielen im Zusammenhang mit den Figuren näher erläutert werde. Es zeigen:
- Fig. 1: ein Schema eines Kombikraftwerkes; und
- Fig. 2: Kraftwerksleistung als Funktion der Zeit bei einem Leistungsabruf entsprechend primary und secondary response.

### WEGE ZUR AUSFÜHRUNG DER ERFINDUNG -

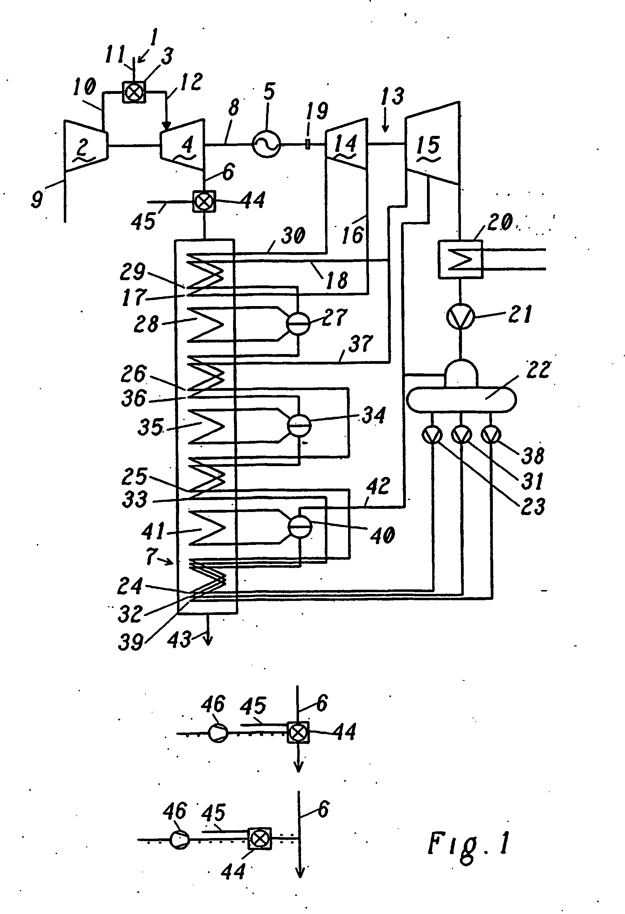

Figur 1 zeigt als Ausführungsbeispiel für das erfindungsgemässe Verfahren eine schematische Darstellung eines Kombikraftwerkes mit Einwellenanlage. Der Wasser-/DampfKreislauf mit Abhitzekessel 7 und Dampfturbinenanlage 13 ist beispielhaft als Dreidruckprozess mit Zwischenüberhitzung 17 ausgeführt.

Unter einem Kombikraftwerk wird im weiteren die Kopplung eines Gas- und eines Dampfprozesses in Form einer Gasturbinenanlage und einer Dampfturbinenanlage verstanden. Die Wärme der Abgase der Gasturbine der Gasturbinenanlage dient dabei zur Dampferzeugung in einem Abhitzekessel. Der erzeugte Dampf wird mittels der Dampfturbinenanlage zur Stromerzeugung genutzt.

Das Kombikraftwerk weist gemäss der Figur 1 eine Gasturbinenanlage 1 auf, deren Abgas 6 einem Abhitzekessel 7 zugeführt wird. Die Gasturbinenanlage 1 besteht aus einem Verdichter 2, einer Brennkammer 3 und einer Gasturbine 4. Die Gasturbine 4, der Verdichter 2 und der Generator 5 sind auf einer gemeinsamen Welle 8 angeordnet. Die Gasturbine 4 treibt über diese gemeinsame Welle 8 sowohl den Verdichter 2 als auch den Generator 5 an. Die Gasturbinenanlage 1 und der Generator 5 werden als Gasturbosatz bezeichnet. Die über eine Ansaugluftleitung 9 dem Verdichter 2 zugeführte Luft gelangt nach der Verdichtung im Verdichter 2 als Verbrennungsluft 10 in die Brennkammer 3. In der Brennkammer 3 wird über die Brennstoffleitung 11 zugeführter Brennstoff verbrannt. Das in der Brennkammer 3 erzeugte Heissgas 12 gelangt zur Gasturbine 4 und wird dort arbeitleistend entspannt.

Eine Gasturbinenanlage kann auch mehrere Brennkammern und mehrere Gasturbinen aufweisen. So sind beispielsweise bei Gasturbinenanlagen mit sequentieller Verbrennung einer Hochdruckbrennkammer mit Hochdruckturbine eine Niederdruckbrennkammer mit Niederdruckturbine nachgeschaltet. Auch kann eine Gasturbinenanlage mehrere Verdichter aufweisen. Ebenso könnte die Gasturbinenanlage mehrwellig aufgebaut sein.

Der im Abhitzekessel 7 in mehreren Druckstufen erzeugte Dampf wird über die jeweiligen Frischdampfleitungen 30,37,42 einer Dampfturbinenanlage 13 zugeführt. Der Hochdruckdampf wird nach dessen Abarbeitung in der Hochdruckdampfturbine 14 der Dampfturbinenanlage 13 über die kalte Zwischenüberhitzerdampfleitung 16 dem Zwischenüberhitzer 17 des Abhitzekessels 7 zugeführt, dort überhitzt und über die heisse Zwischenüberhitzerdampfleitung 18 gemeinsam mit dem Mitteldruckdampf der Mitteldruck-/Niederdruckdampfturbine 15 der Dampfturbinenanlage 13 zugeführt.

Diese Dampfturbinenanlage 13 besteht aus einer Hochdruckdampfturbine 14 und einer Mitteldruck-/Niederdruckdampfturbine 15. Im vorliegenden Fall treibt die Dampfturbinenanlage 13 über eine Kupplung 19 ebenfalls den Generator 5 an. In Fällen in denen sich die Gasturbinenanlage 1 und die Dampfturbinenanlage 13 mit dem Generator 5 auf einer Welle 8 befinden, spricht man auch von Einwellenanlagen. Verfügt die Gasturbinenanlage, bestehend aus Verdichter 2, Brennkammer 3 und Gasturbine 4, und die Dampfturbinenanlage 13 jeweils über einen eigenen Generator 5, so wird dies als eine Mehrwellenanlage bezeichnet. In Analogie zum Gasturbosatz (Gasturbinenanlage und Generator) spricht man bei einer Dampfturbinenanlage mit Generator auch vom Dampfturbosatz. Bei Mehrwellenanlagen können auch mehr als ein Gasturbosatz mit zugehörigem Abhitzekessel mit beispielsweise einem Dampfturbosatz kombiniert sein.

Der in der Dampfturbinenanlage 13 abgearbeitete Dampf strömt in einen Kondensator 20. Nach der Kondensation des Abdampfes im Kondensator 20 wird das Kondensat von der Kondensatpumpe 21 zum Speisewasserbehälter/Entgaser 22 gefördert, dort entgast und gespeichert.

Vom Speisewasserbehälter/Entgaser 22 wird mittels der Hochdruckspeisewasserpumpe 23 Speisewasser zu einem Hochdruckeconomizer 124 gefördert, strömt danach zum Hochdruckeconomizer II 25, zum Hochdruckeconomizer III 26 und von diesem zur Hochdruckdampftrommel 27. Die Hochdruckdampftrommel 27 steht mit dem Hochdruckverdampfer 28 in Verbindung. Weiter folgt der Hochdruckdampftrommel 27 ein Hochdrucküberhitzer 29, an welchem die Hochdruckfischdampfleitung 30 anschliesst, die zur Hochdruckdampfturbine 14 der Dampfturbinenanlage 13 führt.

Vom Speisewasserbehälter/Entgaser 22 wird mittels der Mitteldruckspeisewasserpumpe 31 Speisewasser zu einem Mitteldruckeconomizer 132 gefördert, strömt danach zum Mitteldruckeconomizer II 33 und von diesem zur Mitteldruckdampftrommel 34. Die Mitteldruckdampftrommel 34 steht mit dem Mitteldruckverdampfer 35 in Verbindung. Weiter folgt der Mitteldruckdampftrommel 34 ein Mitteldrucküberhitzer 36, an welchem die Mitteldruckfrischdampfleitung 37 anschliesst, die zur Mitteldruck-/Niederdruckdampfturbine 15 der Dampfturbinenanlage 13 führt.

Vom Speisewasserbehälter/Entgaser 22 wird mittels der Niederdruckspeisewasserpumpe 38 Speisewasser zu einem Niederdruckeconomizer 39 gefördert und strömt von diesem zur Niederdruckdampftrommel 40. Die Niederdruckdampftrommel 40 steht mit dem Niederdruckverdampfer 41 in Verbindung. An der Niederdruckdampftrommel 40 schliesst die Niederdruckfrischdampfleitung 42 an, die ebenfalls zur Dampfturbinenanlage 13 führt. Der Niederdruckdampf dient ebenfalls zur Entgasung des Kondensates im Speisewasserbehälter/Entgaser 22.

Der Hochdruckeconomizer 124, der Hochdruckeconomizer II 25, der Hochdruckeconomizer III 26, die Hochdruckdampftrommel 27, der Hochdruckverdampfer 28 und der Hochdrucküberhitzer 29 bilden zusammen ein bei einer ersten Druckstufe arbeitendes Hochdruckdampfsystem.

Der Mitteldruckeconomizer I 32, der Mitteldruckeconomizer II 33, die Mitteldruckdampftrommel 34, der Mitteldruckverdampfer 35 und der Mitteldrucküberhitzer 36 bilden zusammen ein bei einer zweiten Druckstufe arbeitendes Mitteldruckdampfsystem.

Der Niederdruckeconomizer 39, die Niederdruckdampftrommel 40 und der Niederdruckverdampfer 41 bilden zusammen ein bei einer dritten Druckstufe arbeitendes Niederdruckdampfsystem.

Im vorliegenden Fall wurde ein Abhitzekessel bestehend aus Trommel-Umlaufverdampfem beschrieben. Daher wird das durch die Economizer der jeweiligen Druckstufe vorgewärmte Speisewasser in die Dampftrommel gefördert. Das Trommelwasser wird im System Dampftrommel-Verdampfer umgewälzt und dabei anteilig verdampft. In der Dampftrommel erfolgt die Separation von Wasser und Dampf. Das Wasser wird erneut dem Verdampfer zugeführt, während der Dampf direkt oder über einen möglicherweise vorhandenen Überhitzer zur Dampfturbinenanlage gelangt.

Nach dem Durchströmen des Abhitzekessels 7 gelangt das Abgas 6 schliesslich über einen Kamin 43 ins Freie.

Im vorliegenden Fall befindet sich unmittelbar in der Abgasleitung 6 zwischen Gasturbine 4 und Abhitzekessel 7 eine Zusatzfeuerung 44 mit der entsprechenden Brennstoffleitung 45. Mittels dieser Zusatzfeuerung 44 kann das Abgas 6 der Gasturbine 4 erforderlichenfalls nachbeheizt werden, wobei der im Abgas 6 vorhandene Restsauerstoff genutzt wird. Da die Zusatzfeuerung 44 nur in Betrieb ist, wenn die Gasturbinenanlage 1 in Betrieb ist, kommt diese zunächst ohne Frischlüfter aus. Es besteht jedoch die Möglichkeit die Zusatzfeuerung 44 auch mit einem Frischlüfter 46 zu betreiben.

Die Zusatzfeuerung 44 kann aber auch separat angeordnet sein. Das Rauchgas der Zusatzfeuerung 44 kann in diesem Fall dem Abgas 6 der Gasturbine 4 entweder vor dem Eintritt in den Abhitzekessel 7 aber auch an beliebiger Stelle innerhalb des Abhitzekessels 7 zugemischt werden. In diesem Fall ist jedoch ein Frischlüfter 46 zum Betreiben der Zusatzfeuerung 44 erforderlich.

Neben dem dargestellten Ausführungsbeispiel mit einer Zusatzfeuerung 44 zwischen Gasturbine 4 und Abhitzekessel 7 kann die Zusatzfeuerung 44 auch innerhalb des Abhitzekessels 7 vorzugsweise in Strömungsrichtung vor einer jeweiligen Druckstufe angeordnet sein. Auch können mehrere Zusatzfeuerungen vor den jeweiligen Druckstufen angeordnet sein. Bei einer Kombianlage kann, wie beispielsweise in der EP 1 050 667 beschrieben, mit Vorteil eine Zusatzfeuerung zwischen dem Hochdrucküberhitzer und dem Hochdruckverdampfer im Abhitzekessel angeordnet sein.. Dies hat den Vorteil, die Zusatzfeuerung auch dann betreiben zu können, wenn das Abgas der Gasturbine zum Beispiel schon auf einer Temperatur von über 550°C oder 600°C liegt, oder insgesamt eine höhere Leistung zufeuem zu können, ohne einen - beispielsweise aufgrund der verwendeten Werkstoffe vorgegebenen - oberen Grenzwert für die Temperatur im Abhitzekessel zu überschreiten.

Der Aufbau des beschriebenen Wasser-/Dampf-Kreislaufes, des Abhitzekessels 7, der Gasturbinenanlage 1 und der Dampfturbinenanlage 13 ist lediglich als ein Beispiel zu betrachten, da wie allgemein bekannt ist, derartige Komponenten bzw. Systeme sehr unterschiedlich ausgebildet sein können. Für den Erfindungsgedanken ist lediglich wesentlich, dass sich
- zwischen Gasturbine 4 und Abhitzekessel 7, d. h. in der Abgasleitung 6,
- innerhalb des Abhitzekessels 7 oder
- dem Abhitzekessel 7 beigestellt
eine Zusatzfeuerung 44 befindet.

Hinsichtlich der Regelung der Leistung bzw. der Frequenz in Stromnetzen unterscheidet man neben dem sogenannten Totband mit der Primärregelung und Sekundärregelung verschiedene Arten der Regelung. Da elektrische Energie auf dem Weg vom Erzeuger zum Verbraucher nicht gespeichert werden kann, muss theoretisch in jedem Augenblick genau so viel elektrische Energie erzeugt werden, wie verbraucht wird. Die Frequenz der elektrischen Energie hängt direkt von der Drehzahl der Generatoren ab. Kommt es nun zu einem bestimmten Zeitpunkt zu einem Erzeugungsdefizit, so wird dieses Defizit zunächst durch die in den Schwungmassen der rotierenden Maschinen (Turbinen, Generatoren) enthaltene Energie gedeckt Die Maschinen werden dadurch abgebremst, wodurch die Drehzahl und damit auch die Frequenz weiter sinkt. Wird dieser Tendenz nicht durch geeignete Leistungsregelungen entgegengewirkt, würde dies zum Netzzusammenbruch führen.

Innerhalb des sogenannten Totbandes im Bereich kleiner Frequenzabweichungen von bis zu +/-0.07 - 0.1 Hz erfolgen im Normalfall keinerlei Regeleingriffe. Möglich ist in diesem Bereich lediglich eine verzögerte langsame Gegensteuerung zur Kompensation bleibender Abweichungen zwischen Erzeugung und Verbrauch.

Grössere Frequenzabweichungen im Bereich von 0.1 - 3.0 Hz hervorgerufen durch Kraftwerksausfälle und Schwankungen im Stromverbrauch werden durch die Primärregelung auf die Kraftwerke im gesamten Stromnetz aufgeteilt. Das Ungleichgewicht zwischen Erzeugung und Verbrauch muss innerhalb von Sekunden durch Regelung der Erzeugung ausgeglichen werden. Die Primärregelung dient damit der Stabilisierung der Frequenz bei möglichst kleiner Abweichung, jedoch auf einem vom Netzwert abweichenden Niveau.

Die sich an die Primärregelung anschliessende Sekundärregelung hat die Aufgabe, die Frequenz wieder auf den Netzwert z. B. 50 Hz zurückzuführen und das Gleichgewicht zwischen den Stromerzeugern und -verbrauchern wieder herzustellen.

Man unterscheidet ferner eine plötzliche Erhöhung und einen plötzlichen Abfall der Netzfrequenz. Im Falle einer Erhöhung der Frequenz, beispielsweise durch Abschaltung grosser Verbraucher, wird eine rasche Verminderung der Leistung der Erzeugereinheiten verlangt Man bezeichnet diesen Vorgang auch als "high frequency response".

Von besonderer Bedeutung ist ein plötzlicher Abfall der Netzfrequenz. In einem derartigen Fall muss zusätzliche Leistung sofort und schnell bereitgestellt und weiterhin über einen längeren Zeitraum verfügbar gehalten werden. Für die Phase der schnellen Leistungsbereitstellung wird international der Begriff "primary response" und für die Phase des sich anschliessenden Haltens der Zusatzleistung der Begriff "secondary response" verwendet.

Es sei angemerkt, dass die einzelnen Begriffe weltweit nicht immer einheitlich verwendet werden und sich ebenso auf unterschiedliche Frequenzbereiche, Zeiträume, Leistungen u. dgl. beziehen können.

Wird nun von einem Kombikraftwerk eine sofortige und schnelle Leistungserhöhung (primary response) gefordert, welche nach dem Leistungsanstieg auch längere Zeit (secondary response) gehalten werden soll, so ergeben sich eine Reihe von Problemen.

Zunächst gilt es, die maximal zulässigen Leistungs- bzw. Temperaturgradienten einzuhalten. Sollte dies durch spezielle Netzanforderungen oder auf Grund von Auslegung, Bauweise und Zustand der Gasturbinenanlage nicht möglich sein, so macht sich ein Überfeuern der Anlage verbunden mit einem entsprechenden Lebensdauerveriust bereits während der Leistungssteigerung unabhängig von der gefahrenen Ist-Leistung erforderlich.

Während des Hochfahrens einer derartigen Anlage können, um gewisse Komponenten nicht übermässig zu strapazieren, auch sog. Haltepunkte vorgegeben sein, bei weichen die Leistung nicht weiter erhöht sondern abgewartet wird, bis sich ein stabiler Zustand in Bezug auf Druck, Temperatur etc. eingestellt hat (insbesondere für den Dampfkreislauf beispielsweise den Abhitzekessel relevant) bzw. um kritische Spannungszustände beispielsweise in dickwandigen Bauteilen (z. B: Kesseltrommeln, Dampfturbinengehäuse, - rotoren) infolge stark dynamischer thermischer Belastung zu vermeiden. Infolge einer netzseitigen Leistungsabfrage unter den Bedingungen von primary response kann es notwendig sein, einen vorgesehenen Haltepunkt vorzeitig zu verlassen oder zu durchfahren, mit entsprechenden negativen Auswirkungen auf die Lebensdauer der Anlage.

Wie bereits erwähnt, sind moderne Gasturbinenanlagen aus Gründen guter Teillasteigenschaften, d.h. eines hohen Teillastwirkungsgrades, so ausgelegt, dass diese in einem weiten oberen Leistungsbereich mit Auslegungstemperatur betrieben werden. Innerhalb dieses Leistungsbereiches erfolgt die Leistungsregelung durch eine Regelung des Massenstromes der Ansaugluft mittels verstellbarer Leitschaufeln am Verdichtereintritt in Verbindung mit der Regelung der Brennstoffwärmeleistung. Bei Nennleistung sind die Möglichkeiten über den Luftmassenstrom ausgeschöpft.

Moderne Kombikraftwerke sind heute die Kraftwerke mit dem höchsten Wirkungsgrad. Im Bereich der konventionellen Kraftwerke garantieren sie eine äusserst wirtschaftliche Stromerzeugung. Die Kombikraftwerke werden daher vorzugsweise bei Nennleistung im Mittel- bzw. Grundlastbereich betrieben.

Aus der dargelegten Auslegung und Fahrweise einer Gasturbinenanlage bzw. eines Kombikraftwerkes folgt:
1. Bei einer schnellen Leistungserhöhung im Bereich unterhalb der oberen Prozesstemperaturen kann es lediglich aus regelungstechnischen und Genauigkeitsgründen sowie beim Verlassen der Fahrregime des Normalbetriebes zu zeitlich begrenzten Überschreitungen der maximal zulässigen oberen Prozesstemperaturen kommen.
2. Bei einer schnellen Leistungserhöhung im Bereich der bereits gefahrenen oberen Prozesstemperaturen kommt es beim Verlassen der Fahrregime des Normalbetriebes zwangsläufig zu Überschreitungen der maximal zulässigen oberen Prozesstemperaturen.
3. Eine Leistungserhöhung über die Nennleistung hinaus bzw. beginnend bei Nennleistung ist ausschliesslich durch ein Überfeuern der Gasturbinenanlage möglich. Durch die damit verbundene enorme Überlastung insbesondere des Heissgaspfades ist der Betrieb einer Gasturbinenanlage oberhalb der Nennleistung nur zeitlich stark begrenzt möglich oder sinnvoll.

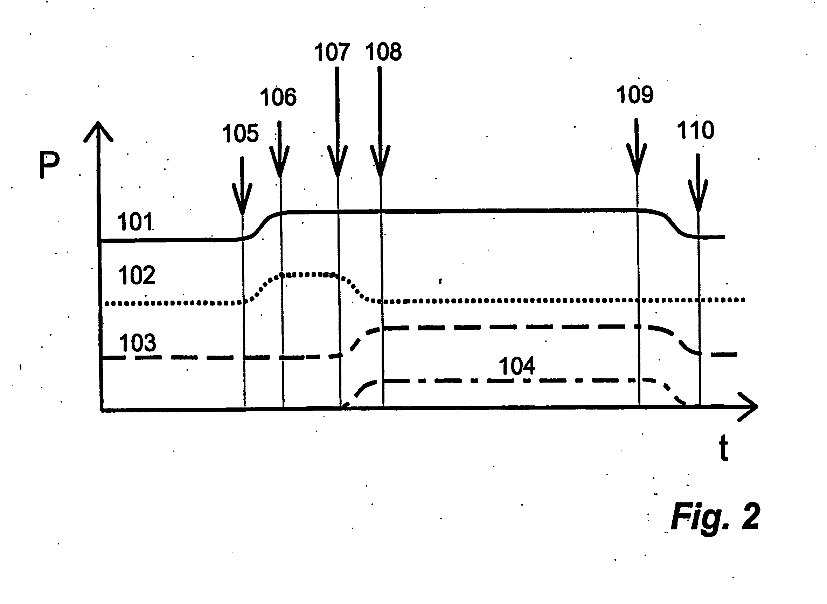

Aus diesen Gründen kommt nun das in Figur 2 dargestellte Verfahren zur Leistungserhöhung bzw. zum Halten einer Zusatzleistung bei primary und secondary response Anforderungen zum Einsatz. Dargestellt ist hier schematisch die Gesamtleistung P des Kombikraftwerkes 101 als Funktion der Zeit t. Die Kraftwerksleistung ist ferner auf die Gasturbinenanlage 102 und die Dampfturbinenanlage 103 aufgeschlüsselt. Die Zusatzfeuerung 44 des Abhitzekessels 7 ist zunächst nicht In Betrieb. Die Dampferzeugung im Abhitzekessel 7 und die damit verbundene Leistung der Dampfturbinenanlage 13 werden vom Betrieb der Gasturbinenanlage 1 und deren Abgaswärmestrom bestimmt.

Ausgelöst wird nun eine Leistungserhöhung meist durch einen Netzfrequenzabfall von 0.1 - 3.0 Hz, insbesondere von 0.5 -1.0 Hz. In dieser Situation fordert der Netzbetreiber eine schnelle Zusatzleistung, welche, bezogen auf das einzelne Kombikraftwerk, meist im Bereich von 5 - 15 %der Nennleistung, insbesondere im Bereich von 5 -10 % der Nennleistung,liegt. Die Leistungssteigerung muss dabei in einem Zeitraum von 5 - 30 s, insbesondere bevorzugt in einem Zeitraum von 5 - 10 s aufgebaut werden (primary response), und sie muss während eines weiteren Zeitraumes im Bereich von 5 - 50 min, insbesondere während eines Zeitraumes von 15 - 30 min gehalten werden (secondary response). Diese Werte sind länderspezifisch unterschiedlich. Eine international anerkannte Richtlinie bzgl. Der Anforderungen elektrischer Netze ist der National Grid Code für England und Wales, an welchen sich heute viele Länder weltweit anlehnen. Die genannten Zahlenwerte stützen sich im Kem auf diese Richtlinie ab, berücksichtigen aber in der Bandbreite die Belange der Netzbetreiber weltweit, so auch solcher Länder wie Singapur.

Der Zeitpunkt, zu welchem der Netzbetreiber eine zusätzliche Leistung im Sinne von primary response abruft, ist in der Figur 2 als der Zeitpunkt des Beginns des zusätzlichen Leistungsbedarfs 105 bezeichnet. Zu diesem Zeitpunkt beginnt der Leistungsanstieg der Gasturbinenanlage, welcher zum Zeitpunkt 106 (Zeitpunkt des Erreichens des zusätzlichen Leistungsbedarfs) abgeschlossen ist.

Grundsätzlich wäre es nun möglich, die Gasturbinenanlage 1 unter Inkaufnahme einer hohen Belastung so zu betreiben, dass sich sowohl primary als auch secondary response Aufgaben erfüllen lassen. Es zeigt sich aber, dass gerade das Halten der Leistung in der secondary response Phase, und hier insbesondere in einem Leistungsbereich über der Nennleistung, wegen der hohen dabei auftretenden Abnutzung der Gasturbinenanlage 1 ungeeignet ist.

Überraschenderweise kann hier aber die Kombination mit einer Zusatzfeuerung 44 bei einem geeigneten Fahrprofil Abhilfe schaffen. Wie in Figur 2 dargestellt, wird zum Zeitpunkt des Beginns des zusätzlichen Leistungsbedarfs 105 die Leistung der Gasturbinenanlage 1 erhöht. Der zusätzliche Leistungseintrag durch die Gasturbinenanlage 1 ist schnell verfügbar und deckt die Anforderungen der primary response Phase ab. Ebenfalls zum Zeitpunkt des Abrufes des zusätzlichen Leistungsbedarfs 105 wird auch die Zusatzfeuerung 44 in Betrieb gesetzt. Mit Erhöhung der Dampfproduktion im Abhitzekessel 7 beginnt auch die Dampfturbinenleistung zu steigen.

Selbstverständlich kommt es auch durch die Erhöhung der Leistung der Gasturbinenanlage 1 zu einer Erhöhung der Leistung der Dampfturbinenanlage 13. Da die Leistung der Dampfturbinenanlage 13 aber nur ca. 50 % der Leistung der Gasturbinenanlage 1 beträgt, ist dieser Leistungsanstieg für eine prinzipielle Lösung des Problems "secondary response" nicht ausreichend und soll von daher auch nicht Gegenstand der weiteren Betrachtungen sein.

Auf den Leistungseintrag durch die Zusatzfeuerung 44 folgt mit einer gewissen Zeitverzögerung die Dampferzeugung im Abhitzekessel 7 gefolgt von der Leistungserhöhung der Dampfturbinenanlage 13. Der frühest mögliche Beginn der Leistungserhöhung der Dampfturbinenanlage 13 nach Inbetriebnahme der Zusatzfeuerung 44 liegt im Bereich von 10 s. Das späteste Ende des Erreichens der Leistungserhöhung der Dampfturbinenanlage 13 nach Inbetriebnahme der Zusatzfeuerung 44 ist im Bereich von 2 bis 5 min zu erwarten.

Damit ist der Leistungsanteil der Dampfturbinenanlage mittels Zusatzfeuerung 104 vergleichsweise träge und würde keine primary response Leistung erlauben. Nun kann aber, in dem Masse wie sich der zusätzliche Leistungseintrag über die Zusatzfeuerung zwischen den Zeitpunkten 107 (Zeitpunkt des Beginns der Leistungssteigerung mittels Zusatzfeuerung) und 108 (Zeitpunkt des Erreichens des zusätzlichen Leistungsbedarfs mittels Zusatzfeuerung) auf die Leistung der Anlage auswirkt, die zusätzliche Befeuerung der Gasturbinenanlage 1 zurückgenommen werden. Damit lässt sich die Belastung der Gasturbinenanlage 1 entscheidend verringern. Normalerweise kann die Gasturbinenanlage 1 in einem Zeitbereich von 10 s - 5 min, meist im Bereich von 30 s - 2 min wieder in den ursprünglichen Befeuerungszustand zurückgefahren werden. Nach dem Zurückfahren der Gasturbinenanlage 108 (Zeitpunkt des Erreichens des zusätzlichen Leistungsbedarfs mittels Zusatzfeuerung) wird während des ganzen Rests der secondary response Phase die Zusatzleistung über die Zusatzfeuerung 44 im Abhitzekessel 7 und die Dampfturbinenanlage 13 erbracht. Im Idealfall kann die Ueberfeuerung der Gasturbinenanlage zurückgefahren werden, bevor diese auf dem höheren Temperaturniveau durchgewärmt ist, kritische Betriebszustände auftreten usw.

Im Zuge der Entlastung der am Ausgleich des Leistungsdefizites des Stromnetzes beteiligten Kraftwerke kann auch die Zusatzfeuerung 44 zwischen den Zeitpunkten 109 (Zeitpunkt des Zurückfahrens der Zusatzfeuerung) und 110 (Zeitpunkt des Erreichens der Ausgangsleistung der Dampfturbinenanlage) wieder zurückgefahren werden.

Dampfturbinenanlagen können in einem weiten Bereich von Dampfmassenströmen ausgelegt bzw. betrieben werden. D. h., bei entsprechender Schluckfähigkeit können Dampfturbinenanlagen auch grosse über dem Nenndampfmassenstrom liegende Dampfmassenströme allerdings bei eventuell sinkendem Wirkungsgrad verarbeiten. Unter den Bedingungen der Reservestromlieferung ist allerdings die Leistung entscheidend und nicht der Wirkungsgrad.

Beim System des Wasser-/Dampf-Kreislaufes insbesondere dem Abhitzekessel handelt es sich um thermisch träge Anlagen, welche für "primary response" Zwecke wenig geeignet sind, sich jedoch für "secondary response" Zwecke regelrecht empfehlen.

Auf diese Weise kann durch eine entsprechende Auslegung und Gestaltung des Abhitzekessels und eine eventuelle Überdimensionierung des Wasser-/Dampf-Kreislaufes ein Kombikraftwerk zur Erfüllung zusätzlicher Netzanforderungen ausgelegt werden.

### BEZUGSZEICHENLISTE

- 1: Gasturbinenanlage (bestehend aus 2,3,4)
- 2: Verdichter
- 3: Brennkammer
- 4: Gasturbine
- 5: Generator
- 6: Abgas, Abgasleitung
- 7: Abhitzekessel
- 8: (gemeinsame) Welle
- 9: Ansaugluftleitung
- 10: Verbrennungsluft
- 11: Brennstoffleitung (für Brennkammer 3)
- 12: Heissgas
- 13: Dampfturbinenanlage (bestehend aus 14,15)
- 14: Hochdruckdampfturbine
- 15: Mitteldruck-/Niederdruckdampfturbine
- 16: Kalte Zwischenüberhitzerdampfleitung
- 17: Zwischenüberhitzer
- 18: Heisse Zwischenüberhitzerdampfleitung
- 19: Kupplung
- 20: Kondensator
- 21: Kondensatpumpe
- 22: Speisewasserbehälter/Entgaser
- 23: Hochdruckspeisewasserpumpe
- 24: Hochdruckeconomizer I
- 25: Hochdruckeconomizer II
- 26: Hochdruckeconomizer III
- 27: Hochdruckdampftrommel
- 28: Hochdruckverdampfer
- 29: Hochdrucküberhitzer
- 30: Hochdruckfrischdampfleitung
- 31: Mitteldruckspeisewasserpumpe
- 32: Mitteldruckeconomizer I
- 33: Mitteldruckeconomizer II
- 34: Mitteldruckdampftrommel
- 35: Mitteldruckverdampfer
- 36: Mitteldrucküberhitzer
- 37: Mitteldruckfrischdampfleitung
- 38: Niederdruckspeisewasserpumpe
- 39: Niederdruckeconomizer
- 40: Niederdruckdampftrommel
- 41: Niederdruckverdampfer
- 42: Niederdruckfrischdampfleitung
- 43: Kamin
- 44: Zusatzfeuerung
- 45: Brennstoffleitung (für Zusatzfeuerung 44)
- 46: Frischlüfter
- 101: Gesamtleistung (Ausgangsleistung) des Kombikraftwerkes
- 102: Leistungsanteil der Gasturbinenanlage (Ausgangsleistung)
- 103: Leistungsanteil der Dampfturbinenanlage (Ausgangsleistung)
- 104: Leistungsanteil der Dampfturbinenanlage mittels Zusatzfeuerung
- 105: Zeitpunkt des Beginns des zusätzlichen Leistungsbedarfs
- 106: Zeitpunkt des Erreichens des zusätzlichen Leistungsbedarfs (mittels der Gasturbinenanlage)
- 107: Zeitpunkt des Zurückfahrens der Gasturbinenanlage = Zeitpunkt des Beginns der Leistungssteigerung mittels Zusatzfeuerung
- 108: Zeitpunkt des Erreichens der Ausgangsleistung der Gasturbinenanlage = Zeitpunkt des Erreichens des zusätzlichen Leistungsbedarfs mittels Zusatzfeuerung
- 109: Zeitpunkt des Zurückfahrens der Zusatzfeuerung
- 110: Zeitpunkt des Erreichens der Ausgangsleistung des Kombikraftwerkes = Zeitpunkt des Erreichens der Ausgangsleistung der Dampfturbinenanlage

## Patentansprüche

1. Verfahren zur sofortigen, schnellen und temporär bleibenden Erhöhung der Leistung eines Kombikraftwerkes, bestehend aus mindestens einer Gasturbinenanlage (1), mindestens einem Abhitzekessel (7) und mindestens einer Dampfturbinenanlage (13), wobei die Gasturbinenanlage (1) aus mindestens einem Verdichter (2), mindestens einer Brennkammer (3) und mindestens einer Gasturbine (4) besteht, der Abhitzekessel (7) mindestens eine Druckstufe aufweist und die Dampfturbinenanlage (13) aus mindestens einer Dampfturbine (14,15) besteht, bei welchem Kombikraftwerk Luft in dem mindestens einem Verdichter (2) verdichtet, dann als Verbrennungsluft (10) der mindestens einen Brennkammer (3) zugeführt wird, das dort entstehende Heissgas (12) auf die mindestens eine Gasturbine (4) geleitet wird, und das Abgas (6) der Gasturbine (4) in den mindestens einen Abhitzekessel (7) zur Erzeugung von Dampf für die mindestens eine Dampfturbinenanlage (13) verwendet wird, wobei im Strömungsweg des Abgases (6) der Gasturbine (4) eine Zusatzfeuerung (44) angeordnet ist oder wobei ausserhalb des Abgasstromes (6) der Gasturbinenanlage (1) eine Zusatzfeuerung (44) angeordnet ist und über einen Frischlüfter (46) verfügt, und das Rauchgas der Zusatzfeuerung (44) mit dem Abgas (6) der Gasturbinenanlage (1) gemischt wird
**dadurch gekennzeichnet, dass**
für sofortige, schnelle und temporär bleibende Leistungssteigerungen des Kombikraftwerkes die Gasturbinenanlage (1) zur Leistungssteigerung stärker befeuert wird und gleichzeitig die Zusatzfeuerung (44) zugeschaltet wird, und dass, in dem Masse wie eine durch infolge der Zusatzfeuerung (44) bereitgestellte zusätzliche Dampfleistung über die Dampfturbinenanlage (13) als Wellenleistung verfügbar wird, die Gasturbinenanlage (1) in ihrer Leistung wieder zurückgefahren wird.

2. Verfahren nach Anspruch 1, **dadurch gekennzeichnet, dass** die Gasturbinenanlage (1) im wesentlichen während des Aufbaus der Zusatzleistung über die Zusatzfeuerung (44) wieder in ihren ursprünglichen Befeuerungszustand zurückgefahren wird.

3. Verfahren nach einem der obigen Ansprüche, **dadurch gekennzeichnet, dass** die Gasturbinenanlage (1) einen stromerzeugenden Generator (5) antreibt, und dass das Kombikraftwerk eine Dampfturbinenanlage (13) mit mehreren Dampfturbinen (14,15), insbesondere bevorzugt mit einer Hochdruckdampfturbine (14) und einer Mitteldruck- resp. Niederdruckdampfturbine (15) umfasst.

4. Verfahren nach einem der obigen Ansprüche, **dadurch gekennzeichnet, dass** eine Gasturbinenanlage (1) und eine Dampfturbinenanlage (13) auf einer Welle (8) angeordnet sind, und dass die Gasturbinenanlage (1) und die Dampfturbinenanlage (13) über diese gemeinsame Welle (8) einen stromerzeugenden Generator (5) antreiben.

5. Verfahren nach Anspruch 4, **dadurch gekennzeichnet, dass** der Generator (5) zwischen der Gasturbinenanlage (1) und der Dampfturbinenanlage (13) angeordnet ist, und dass zwischen der Dampfturbinenanlage (13) und dem Generator (5) eine Kupplung (19) angeordnet ist.

6. Verfahren nach einem der obigen Ansprüche, **dadurch gekennzeichnet, dass** der Abhitzekessel (7) und die Dampfturbinenanlage (13) in einem geschlossenen Wasser-/Dampf-kreislauf angeordnet sind.

7. Verfahren nach einem der obigen Ansprüche, **dadurch gekennzeichnet, dass** es sich um eine Leistungssteigerung des Kombikraftwerkes im Bereich von 5 - 15 % der Nennleistung , insbesondere bevorzugt im Bereich von 5 - 10 % der Nennleistung handelt, und dass diese Leistungssteigerung in einem Zeitraum von 5 - 30 s, insbesondere bevorzugt in einem Zeitraum von 5 -10 s aufgebaut werden muss, und dass diese zusätzliche Leistung während eines weiteren Zeitraumes im Bereich von wenigstens 5 - 50 min, insbesondere während eines Zeitraumes von 15 - 30 min gehalten werden muss.

8. Verfahren nach einem der obigen Ansprüche, **dadurch gekennzeichnet, dass** die Gasturbinenanlage (1) in einem Zeitbereich von 10 s - 5 min, insbesondere im Bereich von 30 s - 2 min, wieder in den ursprünglichen Leistungsbereich zurückgefahren wird.

9. Verfahren nach einem der obigen Ansprüche, **dadurch gekennzeichnet, dass** die Leistungssteigerung durch einen Netzfrequenzabfall in der Grössenordnung von 0.1 - 3.0 Hz, insbesondere von 0.5 - 1.0 Hz ausgelöst wird.

10. Verfahren nach einem der obigen Ansprüche, **dadurch gekennzeichnet, dass** die Gasturbinenanlage (1) vor der Leistungssteigerung mit Nennleistung betrieben wird, und dass die sofortige, schnelle und temporäre Leistungssteigerung der Gasturbinenanlage (1) durch Überfeuerung der Gasturbinenanlage (1) bewirkt wird.

11. Verfahren nach einem der obigen Ansprüche, **dadurch gekennzeichnet, dass** die Zusatzfeuerung (44) in Strömungsrichtung des Abgases (6) der Gasturbinenanlage (1) vor dem Abhitzekessel (7) und/oder innerhalb des Abhitzekessels (7) angeordnet ist.

12. Verfahren nach einem der obigen Ansprüche, **dadurch gekennzeichnet, dass** die Mischung des Abgases (6) der Gasturbinenanlage (1) und des Rauchgases der Zusatzfeuerung (44) in Strömungsrichtung des Abgases (6) der Gasturbinenanlage (1) vor dem Abhitzekessel (7) und/oderinnerhalb des Abhitzekessels (7) erfolgt.

## Claims

1. Method for immediately, rapidly and temporarily increasing the power output of a combined-cycle power station, comprising at least one gas turbine system (1), at least one waste-heat boiler (7) and at least one steam turbine system (13), with the gas turbine system (1) comprising at least one compressor (2), at least one combustion chamber (3) and at least one gas turbine (4), the waste-heat boiler (7) having at least one pressure stage and the steam turbine system (13) comprising at least one steam turbine (14, 15), in which combined-cycle power station air is compressed in the at least one compressor (2), is then supplied as combustion air (10) to the at least one combustion chamber (3), the hot gas (12) which is produced there is passed to the at least one gas turbine (4), and the exhaust gas (6) from the gas turbine (4) is used in the at least one waste-heat boiler (7) in order to produce steam for the at least one steam turbine system (13), with an additional burner (44) being arranged in the flow path of the exhaust gas (6) from the gas turbine (4) or the additional burner (44) being arranged outside the exhaust gas flow (6) from the gas turbine system (1), and has a fresh air supply (46), and in the burnt gas from the additional burner (44) is mixed with the exhaust gas (6) from the gas turbine system (1),
**characterized in that**
the gas turbine system (1) is supplied with more fuel in order to increase the power output, and the additional burner (44) is switched on at the same time, for immediately, rapidly and temporarily increasing the power output of the combined-cycle power station, and **in that** the power output of the gas turbine system (1) is reduced again to the extent that the additional steam power produced as a result of the additional burner (44) is available via the steam turbine system (13) as shaft power.

2. Method as claimed in Claim 1, **characterized in that** the fuel supply to the gas turbine system (1) is reduced to its original level again essentially while the additional power output is being built up via the additional burner (44).

3. Method as claimed in one of the preceding claims, **characterized in that** the gas turbine system (1) drives an electricity generator (5), and **in that** the combined-cycle power station comprises a steam turbine system (13) with two or more steam turbines (14, 15), particularly preferably with a high-pressure steam turbine (14) and a medium-pressure or low-pressure steam turbine (15).

4. Method as claimed in one of the preceding claims, **characterized in that** a gas turbine system (1) and a steam turbine system (13) are arranged on one shaft (8), and **in that** the gas turbine system (1) and the steam turbine system (13) drive an electricity generator (5) via this common shaft (8).

5. Method as claimed in Claim 4, **characterized in that** the generator (5) is arranged between the gas turbine system (1) and the steam turbine system (13), and **in that** a coupling or clutch (19) is arranged between the steam turbine system (13) and the generator (5).

6. Method as claimed in one of the preceding claims, **characterized in that** the waste-heat boiler (7) and the steam turbine system (13) are arranged in a closed water/steam circuit.

7. Method as claimed in one of the preceding claims, **characterized in that** the method comprises increasing the power output of the combined-cycle power station in the range from 5 to 15% of the rated power output, in particular preferably in the range from 5 to 10% of the rated power output, and **in that** this increase in the power output must be built up in a time period of 5 to 30 seconds, particularly preferably in a time period of 5 to 10 seconds, and **in that** this additional power output must be maintained for a further time period in the range from at least 5 to 50 minutes, in particular for a time period of 15 to 30 minutes.

8. Method as claimed in one of the preceding claims, **characterized in that** the gas turbine system (1) is reduced to the original power output range once again in a time period of 10 seconds to 5 minutes, in particular in the range from 30 seconds to 2 minutes.

9. Method as claimed in one of the preceding claims, **characterized in that** the increase in the power output is initiated by a drop in the grid frequency in the order of magnitude of 0.1 to 3.0 Hz, in particular of 0.5 to 1.0 Hz.

10. Method as claimed in one of the preceding claims, **characterized in that** the gas turbine system (1) is operated at the rated power output before the increase in the power output, and **in that** the immediate, rapid and temporary increase in the power output of the gas turbine system (1) is produced by increasing the fuel supply to the gas turbine system (1).

11. Method as claimed in one of the preceding claims, **characterized in that** the additional burner (44) is arranged upstream of the waste-heat boiler (7), and/or within the waste-heat boiler (7), in the flow direction of the exhaust gas (6) of the gas turbine system (1).

12. Method as claimed in one of the preceding claims, **characterized in that** the exhaust gas (6) from the gas turbine system (1) is mixed with the burnt gas from the additional burner (44) upstream of the waste-heat boiler (7) and/or within the waste-heat boiler (7) in the flow direction of the exhaust gas (6) from the gas turbine system (1).

## Revendications

1. Procédé d'augmentation immédiate, rapide et temporaire de la puissance d'une centrale électrique combinée constituée d'au moins une installation (1) de turbine à gaz, d'au moins une chaudière de récupération (7) et d'au moins une installation (13) de turbine à vapeur,
l'installation (1) de turbine à gaz étant constituée d'au moins un compresseur (2), d'au moins une chambre de combustion (3) et d'au moins une turbine à gaz (4),
la chaudière de récupération (7) présentant au moins un étage de compression et
l'installation (13) de turbine à vapeur étant constituée d'au moins une turbine à vapeur (14, 15),
de l'air étant comprimé dans d'au moins un compresseur (2) de cette centrale électrique combinée et ensuite apporté comme air de combustion (10) dans d'au moins une chambre de combustion (3), les gaz chauds (12) provenant de celle-ci étant amenés dans d'au moins une turbine à gaz (4) et les gaz de combustion (6) de la turbine à gaz (4) étant utilisés dans d'au moins une chaudière de récupération (7) pour former de la vapeur pour d'au moins une installation (13) de turbine à vapeur,
une combustion supplémentaire (44) étant prévue dans le parcours d'écoulement des gaz de combustion (6) de la turbine à gaz (4) ou une combustion supplémentaire (44) étant prévue à l'extérieur de l'écoulement des gaz de combustion (6) de l'installation (1) de turbine à gaz et disposant d'une alimentation (46) en air frais, les gaz de fumée de la combustion supplémentaire (44) étant mélangés avec les gaz de combustion (6) de l'installation (1) de turbine à gaz,
**caractérisé en ce que**
pour des augmentations immédiates, rapides et temporaires de la puissance de la centrale électrique combinée, l'installation (1) de turbine à gaz est conduite à une combustion plus poussée et en même temps la combustion supplémentaire (44) est branchée pour augmenter la puissance et
**en ce que** la puissance de l'installation (1) de turbine est diminuée en proportion de la puissance vapeur supplémentaire fournie par la combustion supplémentaire (44) et apportée comme puissance à l'arbre par l'installation (13) de turbine à vapeur.

2. Procédé selon la revendication 1, **caractérisé en ce que** l'installation (1) de turbine à gaz est ramenée à ses conditions initiales de combustion essentiellement pendant l'établissement de la puissance supplémentaire grâce à la combustion supplémentaire (44).

3. Procédé selon l'une des revendications précédentes, **caractérisé en ce que** l'installation (1) de turbine à gaz entraîne un générateur (5) de production de courant et **en ce que** la centrale électrique combinée comprend une installation (13) de turbine à vapeur qui présente plusieurs turbines à vapeur (14, 15), et de façon particulièrement préférable une turbine (14) à vapeur haute pression et une turbine (15) à vapeur moyenne pression ou basse pression.

4. Procédé selon l'une des revendications précédentes, **caractérisé en ce qu'**une installation (1) de turbine à gaz et une installation (13) de turbine à vapeur sont disposées sur un arbre (8) et **en ce que** l'installation (1) de turbine à gaz et l'installation (13) de turbine à vapeur entraînent par l'intermédiaire de cet arbre (8) commun un générateur (5) de production de courant.

5. Procédé selon la revendication 4, **caractérisé en ce que** le générateur (5) est disposé entre l'installation (1) de turbine à gaz et l'installation (13) de turbine à vapeur et **en ce qu'**un accouplement (19) est disposé entre l'installation (13) de turbine à vapeur et le générateur (5).

6. Procédé selon l'une des revendications précédentes, **caractérisé en ce que** la chaudière de récupération (7) et l'installation (13) de turbine à vapeur sont disposées dans un circuit fermé d'eau-vapeur.

7. Procédé selon l'une des revendications précédentes, **caractérisé en ce que** l'augmentation de la puissance de la centrale électrique combinée est une augmentation de l'ordre de 5 à 15 % de la puissance nominale et de façon particulièrement préférable de l'ordre de 5 à 10 % de la puissance nominale, **en ce que** cette augmentation de puissance doit être établie en une durée de 5 à 30 s et de façon particulièrement préférable en une durée de 5 à 10 s et **en ce que** cette puissance supplémentaire doit être maintenue pendant une durée supplémentaire de l'ordre d'au moins 5 à 50 min et en particulier pendant une durée de 15 à 30 min.

8. Procédé selon l'une des revendications précédentes, **caractérisé en ce que** l'installation (1) de turbine à gaz est ramenée dans sa plage de puissance initiale en une durée de l'ordre de 10 s à 5 min et en particulier de l'ordre de 30 s à 2 min.

9. Procédé selon l'une des revendications précédentes, **caractérisé en ce que** l'augmentation de puissance est déclenchée par une diminution de la fréquence réseau de l'ordre de 0,1 à 3,0 Hz et en particulier de 0,5 à 1,0 Hz.

10. Procédé selon l'une des revendications précédentes, **caractérisé en ce que** l'installation (1) de turbine à gaz fonctionne à la puissance nominale avant l'augmentation de puissance et **en ce que** l'augmentation immédiate, rapide et temporaire de puissance de l'installation (1) de turbine à gaz est obtenue par une combustion plus poussée dans l'installation (1) de turbine à gaz.

11. Procédé selon l'une des revendications précédentes, **caractérisé en ce que** la combustion supplémentaire (44) est disposée en amont de la chaudière de récupération (7) dans la direction d'écoulement des gaz de combustion (6) de l'installation (1) de turbine à gaz et/ou à l'intérieur de la chaudière de récupération (7).

12. Procédé selon l'une des revendications précédentes, **caractérisé en ce que** le mélange des gaz de combustion (6) de l'installation (1) de turbine à gaz et des gaz de fumée de la combustion supplémentaire (44) s'effectue en amont de la chaudière de récupération (7) dans la direction d'écoulement des gaz de combustion (6) de l'installation (1) de turbine à gaz et/ou à l'intérieur de la chaudière de récupération (7).
